# EUROPEAN PATENT SPECIFICATION

(11) **EP 4 553 340 B1**
(45) Date of publication and mention of the grant of the patent: **14.01.2026**
(21) Application number: 23208623.1
(22) Date of filing: 08.11.2023
(51) Int. Cl.: F16G 11/02, B66F 9/08

(54) **FLAT BELT WITH END TERMINATION**
FLACHBAND MIT ENDABSCHLUSS
COURROIE PLATE AVEC TERMINAISON D'EXTRÉMITÉ

(43) Date of publication of application: 14.05.2025
(73) Proprietor: BRUGG Lifting AG, 5242 Birr (CH)
(72) Inventor: KNECHT, Colin, 5082 Kaisten (CH)
(74) Representative: Keller Schneider Patent- und Markenanwälte AG

(56) References cited:
- EP-A1- 3 163 119
- EP-B1- 3 303 740
- US-A- 3 672 712

## Description

### Technical Field

The invention pertains to a flat belt for lifting machines such as forklifts or material transporters in high-bay warehouses, with the belt incorporating at least two steel cables as load-bearing elements and an end termination for anchoring or coupling with a pulling machine.

### Background Art

In the field of material handling and lifting equipment, such as forklifts or material transporters in high-bay warehouses, there is a constant need for reliable and durable components. One such component is the chain used in these machines, which is subjected to dynamic loads during operation. The chain is anchored at one end and coupled with a pulling machine at its other end. However, chains need quite some maintenance.

In other fields of applications there is a trend to use belts as a load bearing element. EP 3 609 828 B1 (TI< Elevator) discloses a fibre reinforced polymer belt for elevators. The polymer belt has an end termination. The load-bearing elements of the belt are flat strips of plastic. They are anchored in a slot of an end termination element extending over the entire width of the belt. The connection between the load bearing plastic strips and the end termination element is established by an adhesive. The gluing used in EP 3 609 828 B1 represents an alternative to the known end connections with a clamping device. Gluing avoids exerting a punctual pressure on the fibre-reinforced belt.

From EP 3 303 740 B1 (Zeal), an end termination for a belt for statically securing loads is known. The belt is used for securing loads on a transport trolley. The sheath of the steel cables is stripped off at the end and the steel cables are cast into an adhesive. This adhesive block is then clamped in a steel housing.

Document US3,672,712 A describes a structure for connecting attachments to the ends of fiberglass rods, tubes and other profile shapes. The fiberglass rod end is split into several parts and are kept by a spacer-spreader member apart from each other. The end fitting has a conical cavity in which the spread fiberglass rod ends are located. A potting compound is filled into the conical cavity to form a wedge that precisely matched to the outer contour of the enlarged end of the fiberglass rod.

Document EP 3 163 119 A1 discloses an rope terminal arrangement for composite material ropes. An end block is injection molded on the free rope ends.

### Summary of the invention

It is the object of the invention to create a load-bearing belt suitable for use in a system for material transport. The belt should have an end termination that does not require much space when built into the system for material transport. And the belt with end termination should have a long lifespan.

According to the invention the belt has the following features:
a) The belt has least two wire ropes acting as load-bearing elements of the belt;
b) The belt has a sheath embedding the at least two wire ropes;
c) The belt has at least a end termination for coupling the belt with a pulling machine, an anchor structure or another belt;
d) The end termination comprises a structural component, the structural component housing at least two cylindrical cavities;
e) Each cylindrical cavity accommodates a respective wire rope;
f) Each wire rope is fixed in the associated cavity with a bonding agent;
g) The bonding agent transferring pulling force from the wire rope of the belt to the end termination.

It is to be understood that the term "cylindrical" is meant to cover any geometric shape that is generated by propagating a two dimensional form (x-y plane) along an axis (z) that is orthogonal to the x-y plane.

The invention therefore provides a belt that is based on wire ropes and that has an end termination that can be made small. The end termination may be represented by a unitary steel case, i.e. a steel case consisting of on single piece of metal. In contrast to an end termination that uses clamps, the invention does not need two or more separate parts that are mechanically attached or screwed to each other. Also, in contrast products as shown e.g. in EP 3 303 740 B1 the invention does not need a bulky block of epoxy resin for fixing the wire ropes in the steel casing based on interlocking the outer shape of the epoxy resin block with the steel case (force transfer by shape). Rather more, According to the invention there is a surface adhesion between the bonding agent (or glue) and the wall of the cavity in the end termination. And also, there is a surface adhesion between the bonding agent and the wire rope in the cavity. So the belt with the end termination according to the invention is not space consuming. It can be used in very confined spaces.

In other embodiments, the end termination of the load-bearing belt has two ends, with one end having the cavities for the wire ropes and the other end having a mechanical connector. The mechanical connector has the advantage, that the belt with the end termination is ready for use in a system.

Instead of providing a mechanical connector, the end termination may have a section for a glue connection.

The cross-section of the cylindrical cavity corresponds to the cross-section of the wire rope plus the extent of a bonding gap. A bonding gap typically corresponds to 0.05 - 0.1 mm. However, without digression from the invention, there may be some locations in the cavity where the distance between the cross-section of the cylindrical wall of the cavity on the one hand and the cross-section of the wire rope surface on the other hand is larger than a typical bonding gap. So at some locations the distance may be e.g. more than 0.2 mm, e.g. 0.3 mm or more. The distance may depend on the shape of the outer surface of the wire rope relative to the cylindrical cavity. The distance may be also less than 0.05mm or may even be zero at some points. That is, the steel rope may touch the wall or the cylindrical cavity.

The end termination may have at least four cavities for belts with at least four wire ropes. The advantage of such belts and end terminations is that the ratio between the breadth and the thickness of the belt is quite large. So the belt is relatively thin for its load bearing capacity.

The cavities in the belt could be designed as blind holes. This means that the cavity is closed at the bottom. There are no openings. So during manufacturing the bonding agent (or glue) has to be inserted into the front end opening of the cylindrical cavity. And if too much glue has been inserted into the cavity prior to inserting the stripped wire rope, the excess amount of glue is coming out through the front end opening of the cavity as the wire rope is pressed into the cavity.

In an alternative embodiment, the cavities may have a lateral opening for injecting glue or for releasing excess glue or air out of the cavity.

According to a further embodiment at least one of the inner wall of the cavity and the wire rope are coated with an adhesion enhancer. While it is preferable that both of the cavity wall and the wire ropes are coated, it is also possible to cover only one of the cavity wall and the wire rope may with an adhesion enhancer. While applying an adhesion enhancer makes the production more expensive, it helps increasing the maximum force transfer from the Wire ropes to the end termination.

The cavities may have an extent (length) that is at least six times the diameter of the wire ropes. The wire rope preferably extends from the entry opening of the cylindrical cavity to the bottom of the cavity. The greater the length of the wire rope in the cylindrical cavity (and the bonding agent gap) is, the higher is the maximum force transfer. However, in some applications it is preferable to use a shorter length of cavity in order to minimize the total length of the end termination.

The end termination could be at its end with the cavities a maximum of three times as thick as the wire ropes. That is, the overall thickness of the end termination is in the range of the thickness of the belt. Therefore, the end termination does not occupy a lot of space. This is important for applications, where the available space is small in the area where the end termination is to be anchored in the machine.

Preferably, the end termination has substantially the same thickness as the belt.

According to a particular embodiment the end termination has a thickness of not more than twice the diameter of a wire rope of the belt.

The bonding agent could be a heat-activated bonding agent, preferably an epoxy resin. This has the advantage that during production the settling of the bonding agent can be run quicker. The metallic wire ropes may be heated by induction and so the heat can be transferred from the wire ropes to the bonding agent in the bonding gap.

In a particular embodiment, the sheath of the belt is made of thermoplastic poly urethane (TPU).

The surface of the cylindrical part (lateral wall) of the cavity preferably has a profile roughness (Ra) in the range of 0.5 to 2 micron (ISO 4287:1997). The indicated profile roughness (Ra) increases the force transfer between the wire ropes and the end termination.

The wire ropes could have 6 steel cords. Such wire ropes have a relatively small bending radius. However, more complex structures of the wire ropes may also be used.

The end of the wire ropes in the cylindrical cavity could be tapered. This makes it easier during production to insert the end of the wire ropes into the opening of the cylindrical cavity. A tapering of the wire rope end is particularly preferable, if the bonding gap is small.

The belt with the end termination according to the invention may be used in machines. According to an embodiment, a material transporting or hoisting system (machine) comprises the load-bearing belt. The system could be a mobile forklift.

In accordance with embodiments, a load-bearing belt in a system for material transport equipment comprises at least two wire ropes acting as load-bearing elements, embedded within a sheath. The belt also includes two end terminations for coupling the belt with a pulling machine (e.g. drive for hoisting) or an anchor structure (e.g. hoisting platform). Each end end termination houses at least two cylindrical cavities, each accommodating a respective wire rope of the belt. Each wire rope is fixed in the associated cavity with a bonding agent, which transfers pulling force from the wire rope to the body of the end end termination.

Other advantageous embodiments and combinations of features come out from the detailed description below and the entirety of the claims.

### Brief description of the drawings

The drawings used to explain the embodiments show:
- Fig. 1a,b: a cross-section of the end termination in a plane orthogonal to the longitudinal axis of the belt (see line C-C in Fig. 1b) and in a plane parallel to the longitudinal axis of the belt (see line A-A in Fig. 1a).
- Fig. 2: Fig. 2 shows a schematic representation of an alternative belt with end termination.
- Fig. 3: a schematic representation of a hoisting machine.
- Fig. 4: a schematic cross-section of the rope in the cylindrical cavity.

In the figures, the same components are given the same reference symbols.

### Preferred embodiments

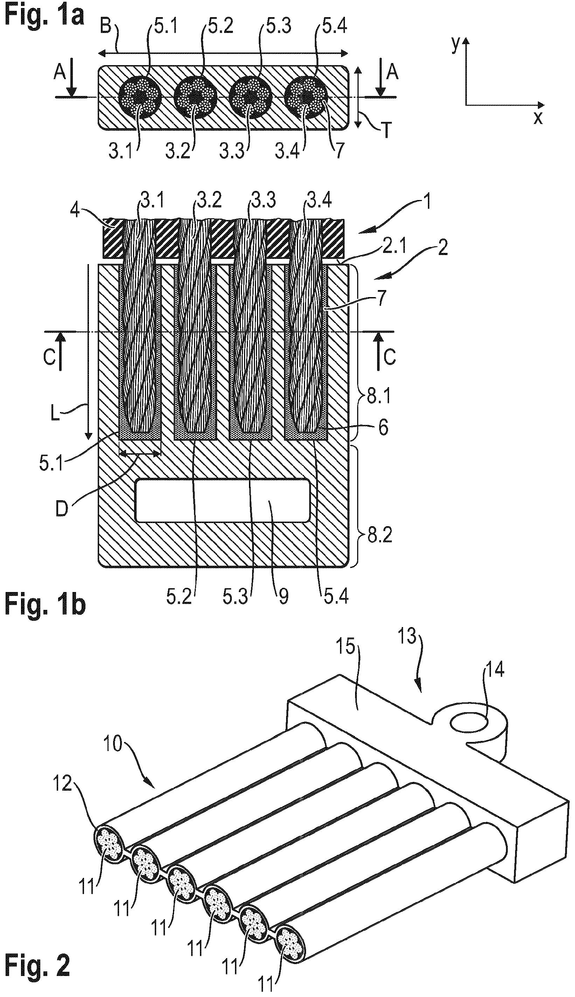

Figure 1a and 1b show a schematic representation of the end of a belt 1 and of the end termination 2 of the belt 1.

According to this first preferred embodiment, the belt 1 has e.g. 4 wire ropes 3.1 - 3.4, each of them having 6 strands made of steel. The strands themselves are made of a number of steel wires. The structure of the wire ropes 3.1 3-4 may be of conventional nature. The wire ropes 3.1 - 3.4 are covered with a common sheath 4. The sheath 4 connects the 6 wire ropes to each other and protects them when being in contact with pulleys. The sheath also protects the wire ropes against humidity and chemical impact. The wire ropes are substantially round in cross-section and have a diameter of e.g.1 - 2 mm. The sheath has a thickness of e.g. 1 mm. The belt has a ratio breadth (B) to thickness (T) of B:T > 2:1. In the present embodiment the ratio breadth to thickness B:T is about 5:1.

The end termination 2 of the present embodiment is a steel body and has substantially the shape of flat rectangular box. The steel body preferably has a thickness T (see Fig. 1a) that is in the same range as the thickness of the belt 1. That is, the thickness of the steel body is not more than twice as thick as the belt 1.

The end termination 2 has a housing 8.1 with a first end face 2.1. According to the present embodiment of the invention, this end face 2.1 has openings to the cylindrical cavities 5.1 - 5.4 of the housing 8.1. The cylindrical cavities 5.1 - 5.4 have a ratio length (L) to diameter (D) that is e.g. about L/D = 10. The higher the ratio is, the better is the force-transfer from the wire ropes to the steel case. However, as the ratio increases the end termination occupies more space. It is preferable to keep the end termination as small as possible for the required force-transfer in the particular application.

The wire ropes 3.1 - 3.4 extend to the bottom of the cylindrical cavities 5.1 - 5.4. Inside the cylindrical cavities 5.1 - 5.4 there is no sheath around the wire ropes 3.1 - 3.4. There is just a bonding gap 7 between the wire rope and the lateral cylindrical wall of the cavity. The bonding gap 7 is typically less than 0.2 mm. So, the diameter of the cylindrical cavity 5.4 corresponds to the diameter of the wire rope 3.4 plus twice the thickness of the bonding gap 7. (As the bonding gap is running around the wire rope it is counted twice in this calculation.)

According to the invention, the bonding gap 7 is completely filled with a bonding agent such as epoxy resin. The epoxy resin is the only force-transmitting means between the belt 1 and the steel case of the end termination 2. According to the invention, there is no need for a clamping mechanism applying clamping force transversely to the longitudinal direction of the wire ropes.

In the present embodiment, the wire rope 3.4 has a tapering end 6. The tapering angle is less than 45°. The angle is preferably in the range of 20° - 30°. The tapering angle 6 makes the insertion of the wire rope into the cylindrical bore easier during mounting the end termination to the belt.

At the second end of the end termination there is a coupling structure 8.2. In the present embodiment, this coupling structure 8.2 has an eyelet 9. A hook (not shown) may be inserted into the eyelet 9 for connecting the end termination 2 to a static structure (frame) of a machine or to a drive (piston, rotating drum) of a machine.

Fig. 2 shows a schematic representation of an alternative belt with end termination. In the embodiment shown in Fig. 2 the belt 10 has 6 wire ropes 11. The sheath 12, which envelopes all 6 wire ropes 11, has a constant thickness, so the circle-like cross-section of the wire ropes 11 is perceivable in the outer contour of the belt 10. The end termination 13 has a structural component that houses the six cylindrical cavities (not shown) for the wire ropes and that has the shape of an elongate bar 15. At its end opposite to the belt 10 a ring-shaped coupling structure 14 is rigidly attached to the bar 15..

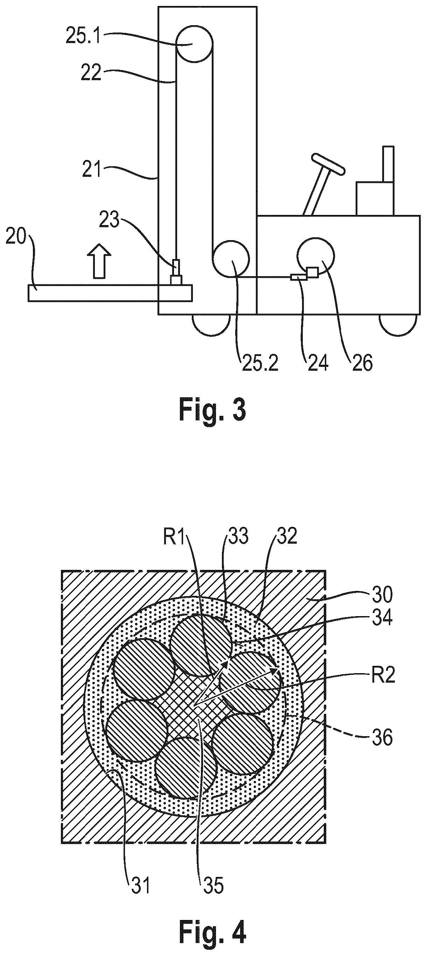

Fig. 3 shows a schematic representation of a forklift. The forklift has a hoisting platform 20 with a fork. The platform 20 is moveably attached to the vertical structure 21. The vertical structure may have guide-rails for guiding the vertical movement of the platform 20.

A belt 22 (e.g. as shown in Fig. 1a, b) is installed for lifting the hoisting platform 20. The first end termination 23 is connected with its mechanical connector to e.g. a hook of the hoisting platform 20. The belt 22 is running via e.g. two pulleys 25.1, 25.2 to a driving drum 26. The second end termination 24 is mechanically secured to the driving drum 26. As the driving drum 26 rotates the belt 22 is wound up on the driving drum 26 and the hoisting platform 20 is lifted up.

Fig. 4 illustrates the definition of the bonding gap. For simplicity reasons, the Fig. 4 shows only one cavity. The cylindrical wall 31 of the cavity is e.g. substantially circular. The wire rope in the cavity has 6 wire strands 33 and a core 35. The outer surface 34 of the wire rope varies between a minimal radius R1 and a maximal radius R2. (The difference between the minimal radius R1 and the maximal radius R2 may by similar to the radius of a wire strand 33.9 The bonding agent 32 fills the space between the wall 31 of the cavity and the outer surface 34.

The local bonding gap at a particular position p1 (e.g. the angular position of the radial vector R1 shown in Fig. 4) may be different from the local bonding gab at another particular position p2 (e.g. the angular position of the radial vector R2 shown in Fig. 4). In the framework of the present invention, the overall magnitude of the bonding gap between one wire rope and its cylindrical cavity is to be understood as an average value. The average value is taken from all local positions i.e. all angular positions (i.e. 0° to 360°).

The dashed line 36 in Fig. 4 shows the nominal outer diameter of the wire rope. According to the embodiment illustrated in Fig. 4, the nominal outer diameter 36 is smaller than the circle defined by the wall of the cavity 31. The magnitude of the bonding gap as defined above, is larger than the difference between the radius of the wall 31 of the cavity and the radius of the nominal outer diameter 36, because at certain positions (e.g. at the angular position of vector R1) the local bonding gap is bigger.

It is to be noted that the wire rope does not have to be positioned in the centre of the cylindrical cavity. In fact, the wire rope might make contact with the cylindrical wall at different positions depending on the production circumstances. So, if for example the magnitude of the bonding gab is 0.2 mm (taken as an average as described before) the local bonding gap might be 0.4 mm at one angular position and 0.0 at an opposite angular position.

The embodiments shown in the figures may be modified in many ways without leaving the scope of the invention.

In an example embodiment, a load-bearing belt is provided for use in a stationary system for material transport such as a lift in a warehouse. In such an embodiment the belt may e.g. include four or more wire ropes that act as load-bearing elements. The belt has a sheath that embeds and connects the at least wire ropes.

In another modification of the embodiments, the belt may have two end terminations of different kind, e.g. a hook on one end and an eyelet on the other.

In a particular modification, one end has the cavities for the wire ropes and the other end has a mechanical connector. The end termination can be built very small. In fact the cross-section of the end termination is not bigger than the belt.

In yet another modification of the embodiments, the cross-section of the cylindrical cavity is elliptic as the wire ropes also have an elliptic cross-section. The cross-section may also be e.g. hexagonal or octagonal. The cross-section of the wire ropes may also be similar to hexagonal or octagonal.

In a further modification of the embodiments, the end termination of one belt may also be an end termination of another belt. In such a modification, the end termination has two sets of cylindrical cavities, one set at one end face and another set of cavities at an opposite end face. The end termination may have a mechanical coupling structure in between the two sets of cavities.

In a modification as just described, the cavities may not be blind holes but channels extending from one side of the end termination to the other.

## Claims

1. A load-bearing belt (1) for use in a system for material transport equipment, the belt comprising:
a) At least two wire ropes (3.1 - 3.4) acting as load-bearing elements;
b) A sheath (4) embedding the at least two wire ropes (3.1 - 3.4);
c) An end termination (2) for coupling the belt (1) with a pulling machine (26), an anchor structure or another belt;
d) The end termination (2) comprising a structural component (8.1), the structural component (8.1) housing at least two cylindrical cavities (5.1 - 5.4);
e) Each cylindrical cavity (5.1 - 5.4) accommodating a respective wire rope (3.1 - 3.4);
f) Each wire (3.1 - 3.4) rope being fixed in the associated cylindrical cavity (5.1 - 5.4 with a bonding agent;
g) The bonding agent transferring pulling force from the wire rope (3.1 - 3.4) to the end termination (2).

2. The load-bearing belt of claim 1, wherein the end termination (2) has two ends, with one end having the cylindrical cavities (5.1 - 5.4) for the wire ropes (3.1 - 3.4) and the other end having a mechanical connector (8.2).

3. The load-bearing belt of claim 2, wherein the cross-section of the cylindrical cavity (5.1 - 5.4) corresponds to the cross-section of the wire rope (3.1 - 3.4) plus the extent of a bonding gap (7).

4. The load-bearing belt of any preceding claim, wherein the end termination (2) has at least four cylindrical cavities (5.1 - 5.4) for belts with at least four wire ropes (3.1 - 3.4).

5. The load-bearing belt of any preceding claim, wherein the cylindrical cavities (5.1 - 5.4) are designed as blind holes.

6. The load-bearing belt of any preceding claim, wherein at least one of the inner wall of the cavity and the wire rope are coated with an adhesion enhancer.

7. The load-bearing belt of any preceding claim, wherein the cylindrical cavities (5.1 - 5.4) have an extent (length) that is at least six times the diameter of the wire ropes (3.1 - 3.4).

8. The load-bearing belt of any preceding claim, wherein the end termination is at its end with the cavities a maximum of three times as thick as the wire ropes.

9. The load-bearing belt of any preceding claim, wherein the bonding agent is a heat-activated bonding agent, preferably an epoxy resin.

10. The load-bearing belt of claim 1, wherein the sheath (7) of the belt is made of thermoplastic poly urethane (TPU).

11. The load-bearing belt of claim 1, wherein the surface of the cylindrical part of the cavity has a profile roughness (Ra) in the range of 0.5 to 2 micron.

12. The load-bearing belt of claim 1, wherein the wire ropes (3.1 - 3.4) have 6 steel cords.

13. The load-bearing belt of claim 1, wherein the end of the wire ropes (3.1 - 3.4) in the cylindrical cavity is tapered (6).

14. A material transporting or hoisting system comprising the load-bearing belt of any preceding claim.

15. The system of claim 14, wherein the system is a mobile forklift.

## Patentansprüche

1. Ein lasttragender Riemen (1) zur Verwendung in einem System für Materialtransportausrüstungen, wobei der Riemen umfasst:
a) mindestens zwei Drahtseile (3.1 - 3.4), die als lasttragende Elemente dienen;
b) eine Ummantelung (4), die die mindestens zwei Drahtseile (3.1 - 3.4) umgibt;
c) einen Endabschluss (2) zum Koppeln des Riemens (1) mit einer Zugmaschine (26), einer Verankerungsstruktur oder einem anderen Riemen;
d) wobei der Endabschluss (2) eine Strukturkomponente (8.1) umfasst, wobei die Strukturkomponente (8.1) mindestens zwei zylindrische Hohlräume (5.1 - 5.4) aufweist;
e) wobei jeder zylindrische Hohlraum (5.1 - 5.4) ein entsprechendes Drahtseil (3.1 - 3.4) aufnimmt;
f) wobei jedes Drahtseil (3.1 - 3.4) in dem zugehörigen zylindrischen Hohlraum (5.1 - 5.4) mit einem Bindemittel befestigt ist;
g) wobei das Bindemittel die Zugkraft vom Drahtseil (3.1 - 3.4) auf den Endabschluss (2) überträgt.

2. Der lasttragende Riemen nach Anspruch 1, wobei der Endabschluss (2) zwei Enden aufweist, wobei ein Ende die zylindrischen Hohlräume (5.1 - 5.4) für die Drahtseile (3.1 - 3.4) aufweist und das andere Ende einen mechanischen Verbinder (8.2) aufweist.

3. Der lasttragende Riemen nach Anspruch 2, wobei der Querschnitt des zylindrischen Hohlraums (5.1 - 5.4) dem Querschnitt des Drahtseils (3.1 - 3.4) zuzüglich der Breite eines Bindespalts (7) entspricht.

4. Der lasttragende Riemen nach einem der vorstehenden Ansprüche, wobei der Endabschluss (2) mindestens vier zylindrische Hohlräume (5.1 - 5.4) für Riemen mit mindestens vier Drahtseilen (3.1 - 3.4) aufweist.

5. Der lasttragende Riemen nach einem der vorstehenden Ansprüche, wobei die zylindrischen Hohlräume (5.1 - 5.4) als Sacklöcher ausgebildet sind.

6. Der lasttragende Riemen nach einem der vorstehenden Ansprüche, wobei mindestens eines aus der Innenwand des Hohlraums und aus dem Drahtseil mit einem Haftvermittler beschichtet ist.

7. Der lasttragende Riemen nach einem der vorstehenden Ansprüche, wobei die zylindrischen Hohlräume (5.1 - 5.4) eine Ausdehnung (Länge) aufweisen, die mindestens sechsmal so gross ist wie der Durchmesser der Drahtseile (3.1 - 3.4).

8. Der lasttragende Riemen nach einem der vorstehenden Ansprüche, wobei der Endabschluss an seinem Ende mit den Hohlräumen maximal dreimal so dick ist wie die Drahtseile.

9. Der lasttragende Riemen nach einem der vorstehenden Ansprüche, wobei das Bindemittel ein wärmeaktivierbares Bindemittel, vorzugsweise ein Epoxidharz, ist.

10. Der lasttragende Riemen nach Anspruch 1, wobei die Ummantelung (7) des Riemens aus thermoplastischem Polyurethan (TPU) hergestellt ist.

11. Der lasttragende Riemen nach Anspruch 1, wobei die Oberfläche des zylindrischen Teils des Hohlraums eine Profilrauheit (Ra) im Bereich von 0,5 bis 2 Mikrometer aufweist.

12. Der lasttragende Riemen nach Anspruch 1, wobei die Drahtseile (3.1 - 3.4) sechs Stahlseile aufweisen.

13. Der lasttragende Riemen nach Anspruch 1, wobei das Ende der Drahtseile (3.1 - 3.4) in dem zylindrischen Hohlraum verjüngt (6) ist.

14. Ein Materialtransport- oder Hebesystem, das den lasttragenden Riemen nach einem der vorstehenden Ansprüche umfasst.

15. Das System nach Anspruch 14, wobei das System ein mobiler Gabelstapler ist.

## Revendications

1. Courroie porteuse (1) destinée à être utilisée dans un système d'équipement de transport de matériaux, la courroie comprenant :
a) au moins deux câbles métalliques (3.1 - 3.4) servant d'éléments porteurs ;
b) une gaine (4) incorporant les au moins deux câbles métalliques (3.1 - 3.4) ;
c) une terminaison d'extrémité (2) pour coupler la courroie (1) à une machine de traction (26), à une structure d'ancrage ou à une autre courroie ;
d) la terminaison d'extrémité (2) comprenant un composant structurel (8.1), dans laquelle le composant structurel (8.1) comprend au moins deux cavités cylindriques (5.1 - 5.4) ;
e) chaque cavité cylindrique (5.1 - 5.4) recevant un câble métallique respectif (3.1 - 3.4) ;
f) chaque câble métallique (3.1 - 3.4) étant fixé dans la cavité cylindrique associée (5.1 - 5.4) avec un agent de liaison ;
g) l'agent de liaison transférant une force de traction du câble métallique (3.1 - 3.4) à la terminaison d'extrémité (2).

2. Courroie porteuse selon la revendication 1, **caractérisée en ce que** la terminaison d'extrémité (2) comprend deux extrémités, une extrémité comprenant les cavités cylindriques (5.1 - 5.4) pour les câbles métalliques (3.1 - 3.4) et l'autre extrémité comprenant un connecteur mécanique (8.2).

3. Courroie porteuse selon la revendication 2, **caractérisée en ce que** la section transversale de la cavité cylindrique (5.1 - 5.4) correspond à la section transversale du câble métallique (3.1 - 3.4) plus l'étendue d'un espace de liaison (7).

4. Courroie porteuse selon l'une des revendications précédentes, **caractérisée en ce que** la terminaison d'extrémité (2) comprend au moins quatre cavités cylindriques (5.1 - 5.4) pour des courroies avec au moins quatre câbles métalliques (3.1 - 3.4).

5. Courroie porteuse selon l'une des revendications précédentes, **caractérisée en ce que** les cavités cylindriques (5.1 - 5.4) sont conçues comme des trous borgnes.

6. Courroie porteuse selon l'une des revendications précédentes, **caractérisée en ce qu'**au moins l'une de la paroi intérieure de la cavité et du câble métallique est revêtue d'un agent améliorant l'adhérence.

7. Courroie porteuse selon l'une des revendications précédentes, **caractérisée en ce que** les cavités cylindriques (5.1 - 5.4) présentent une étendue (longueur) qui est d'au moins six fois le diamètre des câbles métalliques (3.1 - 3.4).

8. Courroie porteuse selon l'une des revendications précédentes, **caractérisée en ce que** la terminaison d'extrémité est au maximum trois fois plus épaisse que les câbles métalliques, à son extrémité présentant les cavités.

9. Courroie porteuse selon l'une des revendications précédentes, **caractérisée en ce que** l'agent de liaison est un agent de liaison activé par la chaleur, de préférence une résine époxy.

10. Courroie porteuse selon la revendication 1, **caractérisée en ce que** la gaine (7) de la courroie est constituée de polyuréthane thermoplastique (TPU).

11. Courroie porteuse selon la revendication 1, **caractérisée en ce que** la surface de la partie cylindrique de la cavité présente une rugosité de profil (Ra) comprenant une valeur de 0,5 à 2 microns.

12. Courroie porteuse selon la revendication 1, **caractérisée en ce que** les câbles métalliques (3.1 - 3.4) présentent 6 câbles d'acier.

13. Courroie porteuse selon la revendication 1, **caractérisée en ce que** l'extrémité des câbles métalliques (3.1 - 3.4) dans la cavité cylindrique est conique (6).

14. Système de transport ou de levage de matériaux comprenant la courroie porteuse selon l'une des revendications précédentes.

15. Système selon la revendication 14, **caractérisé en ce que** le système est un chariot élévateur mobile.
